# FASCICULE DE BREVET EUROPEEN

(11) **EP 0 447 338 B1**
(45) Date de publication et mention de la délivrance du brevet: **04.05.1994**
(21) Numéro de dépôt: 91460011.9
(22) Date de dépôt: 15.03.1991
(51) Int. Cl.: B60R 9/06

(54) **Dispositif porte-charge adaptable sur l'attelage à rotule d'un véhicule**
Gepäckträgervorrichtung zur Anwendung auf einer Fahrzeugkupplungskugel
Load-carrying device adaptable on a vehicle ball-hitch

(30) Priorité: 16.03.1990 FR 9003588
(43) Date de publication de la demande: 18.09.1991
(73) Titulaire: Lecoq, Roger, F-56910 Saint-Nicolas-du-Tertre (FR)
(72) Inventeur: Lecoq, Roger, F-56910 Saint-Nicolas-du-Tertre (FR)
(74) Mandataire: Le Faou, Daniel

(56) Documents cités:
- EP-A- 0 041 889
- FR-A- 2 428 542
- FR-A- 2 593 128
- GB-A- 2 125 747
- GB-A- 2 195 304
- GB-A- 2 197 273
- US-A- 4 275 981
- US-A- 4 297 069

## Description

La présente invention concerne un dispositif porte-charge adaptable sur l'attelage à rotule d'un véhicule.

Elle concerne plus précisément un dispositif porte-charge qui peut être monté sur la rotule fixée à la ferrure de l'attelage d'un véhicule à l'aide d'une boîte d'attelage de type connu.

D'un emploi plus pratique que les galeries de toit, des dispositifs porte-charge montables à l'arrière d'un véhicule ont déjà été proposés et ont connu un véritable essor avec le développement des activités de loisirs. Ainsi, on connaît des dispositifs permettant de véhiculer des bagages, des bicyclettes, des planches à voile, des skis...

Ceux-ci sont adaptables soit sur le pare-chocs, soit sur la ferrure d'attelage du véhicule, soit sur la rotule du dispositif d'attelage, à l'aide du manchon ou d'une boîte d'attelage verrouillable à engager sur cette dernière.

Ils comprennent le plus souvent un socle formé de tubes horizontaux et des moyens de fixation des charges à transporter qui s'étendent verticalement.

Malheureusement, la plupart de ces dispositifs sont difficiles à monter sur le véhicule. De plus, ceux-ci sont le plus souvent peu stables ce qui peut occasionner des pertes d'objets lors de leur transport. En particulier, il arrive que la boîte d'attelage et le châssis-support qui y est associé subissent un mouvement de rotation par rapport à la rotule.

On décrit dans GB-A-2 125 747 un dispositif porte-charge adaptable sur l'attelage à rotule d'un véhicule, du type boulonné contre une ferrure d'attelage à l'arrière du véhicule, qui comprend un châssis-support muni d'une boîte d'attelage à verrouillage destinée à venir s'engager sur ladite rotule, et une plaque d'appui destinée à être montée entre la ferrure d'attelage et le support de la rotule du véhicule. Le châssis-support comporte en outre deux flancs verticaux en utilisation et des moyens d'appui du châssis sur la plaque d'appui, la zone de contact de ceux-ci étant située, en utilisation, en-dessous de ladite rotule. Les moyens d'appui consistent en une découpe particulière de l'extrémité des flancs verticaux de sorte que le châssis prend appui sur la plaque au niveau de sa face supérieure et de sa grande face opposée au véhicule. Ainsi, tout mouvement intempestif de rotation du châssis par rapport à la rotule est empêché.

La présente invention a également pour but de remédier à ce problème de mouvement de rotation intempestif, en adoptant une solution technique différente de celle décrite dans GB-A-2 125 747.

A cette fin, elle propose un dispositif stable, facile et rapide à monter. Ce dispositif est résistant aux charges lourdes et ses moyens de fixation sont peu sollicités.

Ce dispositif, du type évoqué plus haut, est caractérisé en ce que la plaque d'appui consiste en un étrier en forme générale de "U", dont les joues latérales sont destinées à s'étendre sensiblement verticalement et à l'opposé du véhicule, les deux flancs du châssis-support étant adaptés pour venir en contact latéral, en utilisation, avec les joues de l'étrier, lors du verrouillage de la boîte d'attelage sur la rotule, et en ce que lesdits moyens d'appui consistent en une tige, horizontale en utilisation, qui relie lesdits flancs dans leur partie inférieure, ladite tige étant destinée à venir en butée contre les extrémités libres des joues de l'étrier, I'étrier et lesdits flancs du châssis-support étant rendus solidaires au moyen d'une tige de liaison transversale.

Selon d'autres caractéristiques avantageuses mais non limitatives :
- ledit châssis-support comprend en outre un socle-support qui s'étend horizontalement à l'arrière de ladite boîte d'attelage en utilisation, et qui est destiné à recevoir transversalement un plateau porte-charge amovible
- ledit plateau porte-charge est équipé de moyens autorisant son pivotement par rapport au socle-support sélectivement autour d'axes horizontaux en utilisation, disposés dans un même plan, de part et d'autre du socle-support ;
- ledit plateau porte-charge est formé d'un assemblage de profilés creux longitudinaux et transversaux ;
- lesdits profilés transversaux sont adaptés pour recevoir par coulissement des éléments de fixation latéraux ;
- lesdits profilés longitudinaux sont adaptés pour recevoir par coulissement des éléments de fixation verticaux en utilisation ;
- il comprend des pièces de liaison en forme de "T" adaptables sur les profilés longitudinaux dudit plateau et destinées à recevoir par coulissement un second plateau porte-charge et/ou des éléments de fixation verticaux en utilisation;
- le châssis-support est pourvu d'une paire de glissières disposées verticalement en utilisation, dans lesquelles est guidé un chariot portecharge à élévation verticale en utilisation.

D'autres caractéristiques et avantages de l'invention apparaîtront de la description et des dessins annexés qui en présentent des modes de réalisation préférentiels.

Sur ces dessins :
- la figure 1 est une vue de dessus éclatée des différents éléments essentiels qui composent le dispositif porte-charge de l'invention ;
- la figure 2 est une vue de côté du dispositif de la figure 1 alors que les éléments sont assemblés les uns aux autres ;
- la figure 3 est une vue en coupe montrant l'assemblage des joues de l'étrier aux flancs du châssis-support du dispositif ;
- la figure 4 est une vue en coupe montrant le montage d'un plateau transversal sur le socle-support du châssis ;
- la figure 5 est une vue en coupe analogue à la figure 4 mais dans lequel le plateau est monté articulé par rapport au socle-support ;
- la figure 6 est une vue analogue à la figure 5 selon le plan de coupe VI-VI de celle-ci ;
- la figure 7 est une vue en perpective simplifiée montrant deux plateaux porte-charge adaptables sur le châssis ainsi que des accessoires montables sur ceux-ci ;
- la figure 8 est un schéma de principe montrant comment se positionnent des bicyclettes sur ledit dispositif ;
- la figure 9 est une vue simplifiée montrant l'emploi du dispositif de l'invention pour le transport d'un objet encombrant débordant à l'arrière d'un véhicule.

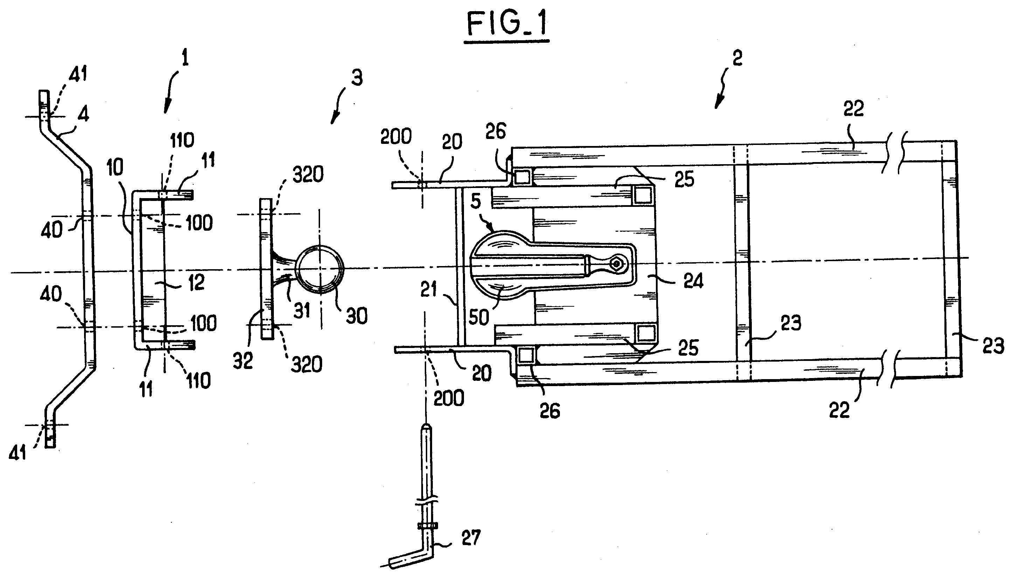

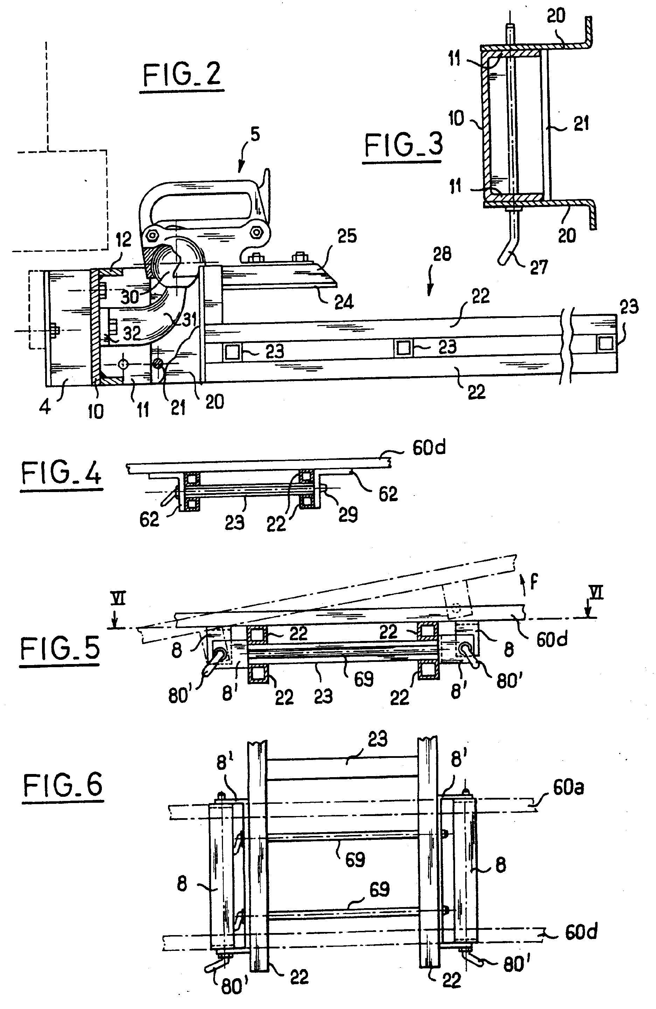

Le dispositif porte-charge conforme à l'invention représenté aux figures 1 et 2 comprend essentiellement un étrier 1 et un châssis-support 2.

L'étrier 1 a la forme générale d'un "U" et comprend une base 10 ainsi que deux joues parallèles 11. Il comprend également deux plaques soudées parallèles 12 qui bordent la base 10 ainsi que les joues 11.

Le châssis-support 2 comporte deux flancs verticaux 20 en forme de "L" disposés symétriquement par rapport à son axe médian longitudinal. Ces flancs sont reliés l'un à l'autre dans leur partie inférieure par une tige horizontale 21 dont on expliquera plus loin la fonction.

Aux petites ailes des flancs 20 est soudée une portion de profilé creux à section carrée 26 qui s'étend verticalement. Sur ces profilés 26 sont soudés d'une part, vers l'axe médian du châssis-support, des profilés 25 de longueur réduite qui reçoivent une plaque 24 et d'autre part, vers l'extérieur du châssis-support, une série de quatre profilés identiques de grande dimension 22, qui s'étendent sensiblement parallèlement à l'axe médian du châssis-support et entre lesquels sont intercalés des profilés transversaux 23.

Sur la plaque 24 est fixée une boîte d'attelage 5 destinée à venir s'engager sur la rotule 30 du support d'attelage 3. Il s'agit d'une boîte d'attelage de type connu, telle que celles décrites dans les documents de brevet FR-A-2 463 688 et FR-A-2 420 441.

Il est à noter que la partie bombée 50 de la boîte d'attelage 5 destinée à recevoir la rotule 30 surplombe le vide et se situe entre la tige 21 et la plaque 24.

L'étrier 1 est destiné à être monté entre la ferrure d'attelage 4 et le support 3 de la rotule 30 d'un véhicule 1. Pour ce faire, chacune de ces pièces présentent une série de trous prévues pour leur assemblage. Ainsi, la ferrure d'attelage 4 comprend deux trous opposés 41 autorisant sa fixation à l'arrière d'un véhicule, ainsi que deux trous 40 pour sa fixation à l'étrier 1. La base 10 de l'étrier comprend deux paires de trous 100 pour sa fixation respectivement à la ferrure d'attelage 4 et au support de la rotule d'attelage 3. De plus, chaque joue 11 comporte un trou 110 dont on expliquera plus loin la fonction. Enfin, le support de la rotule 3 comprend deux trous 320 pour la fixation de celui-ci à l'étrier 1.

La figure 2 montre le dispositif de l'invention une fois assemblé. La ferrure d'attelage 4, l'étrier 1 et le support de rotule 3 sont liés les uns aux autres par une série de boulons visibles sur cette figure. Les joues 11 de l'étrier s'étendent sensiblement verticalement et à l'opposé de la ferrure d'attelage 4. A la base 10 de celui-ci est fixée la plaque 32 du support 3 de la rotule 30. Dans cette position, la rotule 30 déborde au-dessus des joues 11 de l'étrier.

Le châssis-support est placé sur la rotule 30 de haut en bas de sorte que de manière connue, la boîte d'attelage vienne s'engager au niveau de sa partie bombée 50 sur la rotule 30 en se verrouillant sur celle-ci. Lors de cette manoeuvre, les flancs 20, dont l'écartement mutuel est légèrement supérieur à celui des joues 11 de l'étrier, viennent se placer contre ceux-ci par contact latéral.

Ainsi qu'on le voit nettement aux figures 2 et 3, la tige 21 vient en butée contre les extrémités libres des joues 11.

Une tige de sécurité transversale 27 est engagée dans les trous 110, respectivement 200 de l'étrier et des flancs 20 et est maintenue en place par une goupille non représentée.

Tout mouvement de rotation intempestif de la boîte d'attelage, et donc du châssis-support 2, par rapport à la rotule 30 est empêché par le fait que les joues 11 de l'étrier sont en contact avec les flancs 20 du châssis-support et que la tige 21 est en butée contre les extrémités libres des joues de l'étrier. De cette façon, le châssis-support est fixé à la rotule d'attelage du véhicule de manière stable et ne peut bouger ni latéralement ni axialement. Ce dernier étant, comme on le verra dans la suite de la description, destiné à recevoir des charges importantes, les efforts subis par celui-ci seront non seulement encaissés par la rotule mais également par l'étrier 1, les flancs 20 et la tige 21, laquelle est disposée en dessous de la rotule. Ainsi, les moyens de fixation du dispositif sur le véhicule sont peu sollicités, même avec des charges élevées.

Les efforts de traction générés par les charges transportées s'exercent sur la rotule, dans une zone située à sa partie avant (c'est-à-dire sur la partie gauche de la rotule lorsque l'on considère la figure 2) et sensiblement au niveau du plan médian horizontal de celle-ci. De préférence, ce plan et le plan horizontal qui contient la ligne d'appui de la tige 21 sur l'étrier 1 sont équidistants de celui dans lequel sont contenus les axes des boulons de fixation du support de rotule 3 et de l'étrier 1 à la ferrure d'attelage 4. De cette façon, on reconstitue avec ce dispositif les conditions de traction d'une remorque, les efforts s'exerçant principalement dans l'axe de la ferrure d'attelage du véhicule.

Nous allons maintenant décrire, plus spécifiquement en liaison avec les figures 4 à 7, les équipements qu'est susceptible de recevoir le châssis-support 2 pour le transport de charges telles que des bagages, des colis, des bicyclettes ou d'autres charges encombrantes.

Dans la suite de la description, la partie du châssis-support qui est formée des profilés 22 et 23 sera appelée socle-support, et porte la référence 28 à la figure 2.

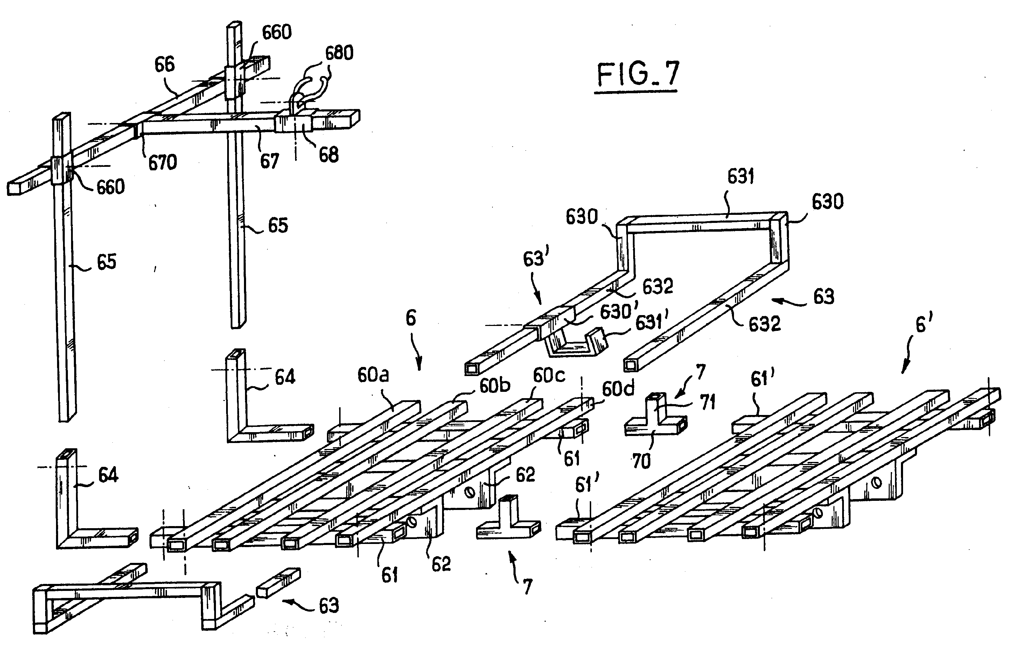

En référence à la figure 7, on a représenté un plateau porte-charge 6 susceptible d'être monté sur le socle-support 28 du châssis 2. Celui-ci comporte deux cornières longitudinales en "L" 62 dont l'écartement mutuel est légèrement supérieur à celui de deux profilés 22 du socle-support 28. Les ailes horizontales de ces cornières portent une série de profilés creux à section carrée 60a, 60b, 60c, 60d. Sur la face inférieure de ceux-ci, et non loin de leur extrémité libre, sont soudés des profilés 61 de section identique à celle des profilés 60.

L'écartement entre le profilé 60a et le profilé 60b est identique à l'écartement entre le profilé 60c et le profilé 60d. Cet écartement est nettement inférieur à la distance qui sépare les profilés 60b et 60c.

Ainsi que le montre la figure 4, le plateau porte-charge 6 est monté sur le socle-support 28 du châssis 2 en engageant les cornières 62 de part et d'autre des profilés 22 de celui-ci de sorte que les profilés 60a à 60b reposent sur ceux-ci. La liaison du plateau porte-charge au socle-support est assurée par une série de tiges de liaison 29 du type de la tige 27 de la figure 3 et qui sont engagées dans des trous que portent les cornières 62.

Dans la variante de montage illustrée aux figures 5 et 6, les cornières 62 sont remplacées par deux paires d'étriers en "U" 8, respectivement 8'. Les deux étriers 8' sont placés de chaque côté du socle-support 28 de telle manière que leurs ailes latérales s'étendent horizontalement de part et d'autre de ce dernier. Elles sont liées l'une à l'autre par deux tiges de liaison 69 qui sont engagées dans des trous prévus dans la base de celle-ci non représentés sur les figures. Les étriers 8 portent au niveau de leur base, les profilés 60a à 60d (deux de ceux-ci sont visibles à la figure 6) et leurs ailes s'étendent verticalement et sont en contact avec les ailes des profilés 8'. Des tiges de liaison 80' assurent la liaison entre chaque paire d'étriers 8 et 8' et sont engagés dans des trous prévus à cet effet.

Des goupilles non représentées permettent le blocage en translation des tiges de liaison 29, 69 et 80'.

Ainsi que cela est représenté à la figure 5, si l'on enlève la tige de liaison 80' située à la droite de la figure, le plateau porte-charge peut pivoter dans le sens de la flèche fautour de l'axe matérialisé par l'autre tige de liaison 80'.

De nouveau en référence à la figure 7, le plateau porte-charge 6 est destiné à recevoir des équipements qui portent les références 63, 64 et 65.

Ainsi, les extrémités libres des profilés 60a et 60d peuvent recevoir par coulissement des éléments qui portent la référence 63. Ces éléments 63 sont formés d'une paire de profilés parallèles 632 dont les extrémités libres sont réunis par des tronçons de profilés 630, 631 formant un "U" dirigé vers le haut. L'arrêt en coulissement des profilés 632 à l'intérieur des profilés 60a et 60d est assuré par des systèmes vis-écrou non représentés.

Sur l'un des profilés 632 est monté un élément 63' formé d'un manchon 630' et d'un étrier 631.

Il est bien entendu que chacun des éléments 63 peut être monté sur les profilés 60a et 60d de manière que le "U" formé par les tronçons de profilé 630 et 631 s'étendent vers le haut ou vers le bas.

Les extrémités libres des profilés 61 situées vers la gauche de la figure 7 sont destinées à recevoir des éléments 64 en forme d'équerre lesquels peuvent recevoir également des profilés 65 verticaux.

Sur ceux-ci est engagée une barre 66 horizontale qui peut coulisser le long des profilés 65 à l'aide de manchons 660.

De manière similaire, est emmanché sur le profilé 66 un manchon 670 qui porte perpendiculairement un profilé 67 qui s'étend parallèlement aux profilés 61 ; ce profilé constitue en quelque sorte une potence. Enfin, sur ce dernier est engagé un manchon 68 qui porte des pinces 680 orientables.

L'arrêt en translation de l'ensemble de ces éléments est également assuré par des systèmes vis-écrou non représentés (mais matérialisés sur les figures par des traits mixtes).

Le socle-support, tel qu'il a été décrit ici avec ses accessoires 63 à 68, peut recevoir des charges telles que des bagages. Dans ce cas, les éléments 63 sont disposés de la manière représentée à la figure 7 de telle manière que leurs extrémités en "U" viennent en appui contre les bagages. Les profilés 65 et 66 peuvent alors servir à l'accrochage de tendeurs ou de moyens de type connu assurant la stabilité des bagages sur le plateau porte-charge.

On verra plus loin dans la description comment ce plateau porte-charge peut être utilisé pour le transport de bicyclettes ou de motocyclettes.

Les extrémités libres des profilés 61 situées vers la droite de la figure peuvent recevoir un second plateau porte-charge 6'. Pour ce faire, on utilise des pièces de liaison 7 en forme de "T". La tige transversale 70 de ces pièces de liaison est destinée à venir s'engager dans les profilés 61 et 61' des plateaux porte-charge 6 et 6'. L'autre branche du "T" 71 s'étend alors verticalement, et pour recevoir des profilés verticaux tels que les profilés 65. Si tel n'est pas le cas, il suffit de faire subir aux pièces de liaison 7 une rotation de 90° de telle manière que la branche 71 se situe dans un plan horizontal. On peut alors poser sur les plateaux porte-charge 6 et 6' des charges volumineuses.

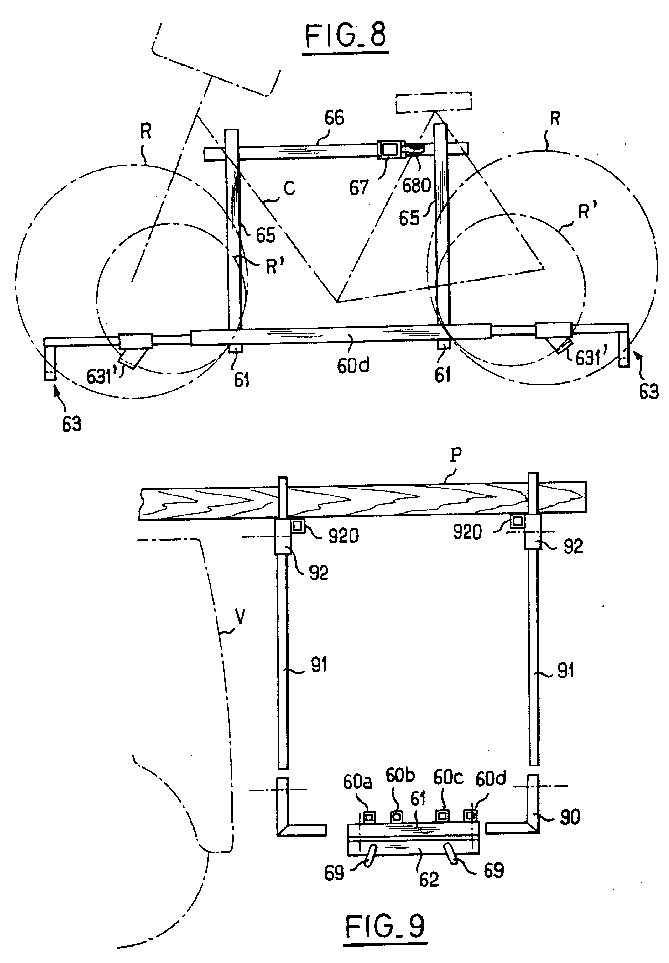

On a représenté très schématiquement à la figure 8, la façon dont peut être utilisé le dispositif porte-charge pour le transport de bicyclettes.

A cet effet, les éléments 63 sont engagés sur les profilés 60a et 60d de telle manière que leur extrémité en "U" s'étendent vers le bas.

Une première bicyclette dont les roues R ont été représentées par des traits mixtes sur cette figure peut être placée entre les profilés 60a et 60b. L'écartement entre ceux-ci a été prévu de manière à recevoir avec peu de jeu les roues de cette bicyclette. Ainsi qu'on le voit à la figure 8, les roues R sont en appui respectivement sur les profilés 61 ainsi que sur les profilés 631 des éléments 63. Le cadre C peut être tenu sans possibilité de se mouvoir, à l'aide de la pince 680 fixée sur le profilé 67.

Une seconde bicyclette, par exemple de plus petite taille peut être mise en place entre les profilés 60c et 60d. Ses roues R' porteront alors respectivement sur les profilés 61 et sur les étriers 631' mis en place sur les éléments 63. Pour maintenir le cadre de celui-ci en place, on aura pris soin de poser sur le profilé 67 une seconde pince 680. Enfin, bien que cela n'apparaisse pas à la figure 8, le dispositif porte-charge peut recevoir par exemple une motocyclette, qui alors prend place entre les profilés 60b et 60c. L'écartement entre ces profilés aura été choisi de manière à correspondre sensiblement à la largeur des roues de celle-ci.

L'installation de bicyclettes ou de motocyclettes sur le dispositif porte-charge peut être facilitée si le plateau 6 est articulé sur le châssis-support tel que cela a été décrit en référence aux figures 5 et 6. Il suffit alors d'incliner le plateau porte-charge d'un côté du châssis-support, d'y faire monter la bicyclette ou la motocyclette puis de faire revenir le plateau porte-charge à l'horizontale.

On montre à la figure 9 une autre situation possible du dispositif porte-charge de l'invention. Dans cette application, les profilés 61 reçoivent des pièces en équerre 90 sur lesquelles sont emmanchés des profilés 91 verticaux. Ceux-ci peuvent recevoir par coulissement des manchons 92 qui portent des traverses horizontales 920. Ces traverses peuvent soutenir un objet P tel qu'une poutre qui est monté sur la galerie d'un véhicule V mais qui déborde à l'arrière de celle-ci.

Le dispositif porte-charge de l'invention peut recevoir d'autres équipements. Ainsi par exemple il est possible d'adapter sur le plateau porte-charge une benne légère pour le transport de matériau tel que du sable ou des graviers. La fixation de cette benne peut être faite par tous moyens connus sur le plateau porte-charge. De préférence ce dernier sera articulé sur le châssis-support de manière à faciliter le déchargement des matériaux contenus dans la benne.

Dans un autre mode de réalisation (non illustré) possible de l'invention, le châssis-support est pourvu d'une paire de glissières qui sont disposées verticalement et servent au guidage d'un chariot porte-charge à élévation verticale. Des moyens d'élévation appropriés tels que vis, câble ou vérin, permettent d'abaisser le chariot pour permettre une prise au sol et de le remonter en vue du transport. Un tel chariot, qui affecte la forme générale d'un "L" en vue de côté peut être utile notamment pour le transport d'une motocyclette, ou d'une voiturette d'handicapé.

## Revendications

1. Dispositif porte-charge adaptable sur l'attelage à rotule d'un véhicule, du type boulonné contre une ferrure d'attelage (4) à l'arrière du véhicule, qui comprend un châssis-support (2) muni d'une boîte d'attelage (5) à verrouillage destinée à venir s'engager sur ladite rotule, et une plaque d'appui (1) destinée à être montée entre la ferrure d'attelage (4) et le support (3) de la rotule (30) du véhicule, le châssis-support (2) comportant en outre deux flancs (20) verticaux en utilisation et des moyens d'appui (21) du châssis (2) sur la plaque d'appui (1), la zone de contact de ceux-ci étant située, en utilisation, en-dessous de ladite rotule, caractérisé en ce que la plaque d'appui (1) consiste en un étrier en forme générale de "U", dont les joues latérales (11) sont destinées à s'étendre sensiblement verticalement et à l'opposé du véhicule, les deux flancs (20) du châssis-support étant adaptés pour venir en contact latéral, en utilisation, avec les joues (11) de l'étrier, lors du verrouillage de la boîte d'attelage (5) sur la rotule, et en ce que lesdits moyens d'appui consistent en une tige (21), horizontale en utilisation, qui relie lesdits flancs (20) dans leur partie inférieure, ladite tige étant destinée à venir en butée contre les extrémités libres des joues (11) de l'étrier (1), l'étrier (1) et lesdits flancs (20) du châssis-support étant rendus solidaires au moyen d'une tige de liaison transversale (27).

2. Dispositif selon la revendication 1, caractérisé en ce que ledit châssis-support comprend en outre un socle-support (28) qui s'étend horizontalement à l'arrière de ladite boîte d'attelage en utilisation, et qui est destiné à recevoir transversalement un plateau porte-charge (6) amovible.

3. Dispositif selon la revendication 2, caractérisé en ce que ledit plateau porte-charge (6) est équipé de moyens (8, 8', 80') autorisant son pivotement par rapport au socle-support (28) sélectivement autour d'axes horizontaux en utilisation, disposés dans un même plan, de part et d'autre du socle-support (28).

4. Dispositif selon la revendication 2 ou 3, caractérisé en ce que ledit plateau porte-charge (6) est formé d'un assemblage de profilés creux longitudinaux et transversaux (61 ; 60a, 60b, 60c, 60d).

5. Dispositif selon la revendication 4, caractérisé en ce que lesdits profilés transversaux (60a, 60b, 60c, 60d) sont adaptés pour recevoir par coulissement des éléments de fixation latéraux (63).

6. Dispositif selon la revendication 4, caractérisé en ce que lesdits profilés longitudinaux (61) sont adaptés pour recevoir par coulissement des éléments de fixation (64, 65) verticaux en utilisation.

7. Dispositif selon la revendication 4, caractérisé en ce qu'il comprend des pièces de liaison (7) en forme de "T" adaptables sur les profilés longitudinaux (61) dudit plateau et destinées à recevoir par coulissement un second plateau porte-charge (6') et/ou des éléments de fixation verticaux (65) en utilisation.

8. Dispositif selon la revendication 1, caractérisé en ce que le châssis-support est pourvu d'une paire de glissières disposées verticalement en utilisation, dans lesquelles est guidé un chariot portecharge à élévation verticale en utilisation.

## Claims

1. Load-carrying device which can be adapted onto the ball joint coupling of a vehicle, of the type bolted against a coupling brace (4) at the rear of the vehicle, which comprises a frame-support (2) provided with a locking coupling box (5) which is intended to come into engagement onto the said ball joint, and a bearing plate (1) which is intended to be mounted between the coupling brace (4) and the support (3) of the ball joint (30) of the vehicle, the frame-support (2) additionally having two flanks (20) which are vertical in use and bearing means (21) for the frame (2) on the bearing plate (1), the contact zone of these being situated, in use, below the said ball joint, characterized in that the bearing plate (1) consists of a stirrup in the general shape of a "U" whereof the lateral cheeks (11) are intended to extend substantially vertically and away from the vehicle, the two flanks (20) of the frame-support being adapted to come into lateral contact, in use, with the cheeks (11) of the stirrup, on locking the coupling box (5) onto the ball joint, and in that the said bearing means consist of a rod (21), horizontal in use, which connects the said flanks (20) in their lower parts, the said rod being intended to abut against the free ends of the cheeks (11) of the stirrup (1), the stirrup (1) and the said flanks (20) of the frame-support being made integral with one another by means of a transverse connecting rod (27).

2. Device according to Claim 1, characterized in that the frame-support additionally comprises a base-support (28) which extends horizontally at the rear of the said coupling box in use, and which is intended to transversely receive a removable load-carrying tray (6).

3. Device according to Claim 2, characterized in that the said load-carrying tray (6) is equipped with means (8, 8', 80') which enable it to pivot with respect to the base-support (28) selectively about horizontal axes in use, which are arranged in the same plane, on either side of the base-support (28).

4. Device according to Claim 2 or 3, characterized in that the said load-carrying tray (6) is formed from an assembly of longitudinal and transverse hollow profiles (61; 60a, 60b, 60c, 60d).

5. Device according to Claim 4, characterized in that the said transverse profiles (60a, 60b, 60c, 60d) are adapted to receive, by sliding, lateral securing elements (63).

6. Device according to Claim 4, characterized in that the said longitudinal profiles (61) are adapted to receive, by sliding, securing elements (64, 65) which are vertical in use.

7. Device according to Claim 4, characterized in that it comprises connecting pieces (7) in the shape of a "T", which can be adapted onto the longitudinal profiles (61) of the said tray and are intended to receive, by sliding, a second load-carrying tray (6') and/or securing elements (65) which are vertical in use.

8. Device according to Claim 1, characterized in that the frame-support is provided with a pair of slide rails arranged vertically in use, in which there is guided a load-carrying carriage which can be raised vertically in use.

## Patentansprüche

1. Gepäckträgervorrichtung zur Anwendung auf einer Kugelkupplung eines Fahrzeugs, die mit einem Kupplungsbeschlag (4) am Heck des Fahrzeugs mit Bolzen verbunden ist, umfassend einen Rahmen (2), der mit einem Kupplungsgehäuse (5) mit Verriegelung versehen ist, welches dazu bestimmt ist, mit der besagten Kugel zusammenzuwirken, und eine Stützplatte (1), die dazu bestimmt ist, zwischen dem Kupplungsbeschlag (4) und dem Träger (3) der Kugel (30) des Fahrzeugs montiert zu werden, wobei der Rahmen (2) außerdem zwei Seitenteile (20) aufweist, die im Gebrauch senkrecht stehen, sowie Abstützmittel (21) des Rahmens (2) auf der Druckplatte (1), wobei der Kontaktbereich dieser beiden Teile im Gebrauch unterhalb der besagten Kugel liegt, dadurch gekennzeichnet, daß die Stützplatte (1) aus einem insgesamt U-förmigen Bügel besteht, dessen Seitenschenkel (11) dazu bestimmt sind, sich im wesentlichen senkrecht und in entgegengesetzter Richtung vom Fahrzeug zu erstrecken, daß die beiden Seitenteile (20) des Rahmens dazu bestimmt sind, im Gebrauch bei Verriegelung des Kupplungsgehäuses (5) auf der Kugel in seitliche Berührung mit den Schenkeln (11) des Bügels zu kommen, und daß die Abstützmittel aus einem im Gebrauch waagerechten Schaft (21) bestehen, der die Seitenteile (20) in ihrem unteren Bereich verbindet, wobei der Schaft dazu bestimmt ist, gegen die freien Endabschnitte der Schenkel (11) des Bügels (1) anzustoßen, und wobei der Bügel (1) und die Seitenteile (20) des Rahmens durch einen querverlaufenden Verbindungsbolzen (27) miteinander verbunden werden.

2. Vorrichtung nach Anspruch 1, dadurch gekennzeichnet, daß der Rahmen außerdem einen Tragsockel (28) umfaßt, der sich im Gebrauch horizontal hinter dem Kupplungsgehäuse erstreckt und dazu bestimmt ist, quer einen abnehmbaren Gepäckträgertisch (6) aufzunehmen.

3. Vorrichtung nach Anspruch 2, dadurch gekennzeichnet, daß der Gepäckträgertisch (6) mit Einrichtungen (8, 8', 80') ausgestattet ist, die ein Verschwenken des Tischs gegenüber dem Tragsockel (28) in ausgewählter Weise um im Gebrauch waagerechte Achsen, die in einer Ebene liegen, beidseitig des Tragsockels (28) ermöglichen.

4. Vorrichtung nach Anspruch 2 oder 3, dadurch gekennzeichnet, daß der Gepäckträgertisch (6) aus quer- und längsverlaufenden Hohlprofilen (61; 60a, 60b, 60c, 60d) besteht.

5. Vorrichtung nach Anspruch 4, dadurch gekennzeichnet, daß die Querprofile (60a, 60b, 60c, 60d) dazu bestimmt sind, in Form einer Gleitführung seitliche Befestigungselemente (63) aufzunehmen.

6. Vorrichtung nach Anspruch 4, dadurch gekennzeichnet, daß die Längsprofile (61) dazu bestimmt sind, in Form einer Gleitführung im Gebrauch senkrechte Befestigungselemente (64, 65) aufzunehmen.

7. Vorrichtung nach Anspruch 4, gekennzeichnet durch T-förmige Verbindungsstücke (7), die an die Längsträger (61) des Tischs passen und dazu bestimmt sind, in Form einer Gleitführung einen zweiten Gepäckträgertisch (6') und/oder im Gebrauch senkrechte Befestigungselemente (65) aufzunehmen.

8. Vorrichtung nach Anspruch 1, dadurch gekennzeichnet, daß der Rahmen mit einem Paar im Gebrauch senkrechter Gleitführungen ausgestattet ist, in denen ein Lastträgerwagen mit im Gebrauch senkrechtem Hub geführt ist.
